# EUROPÄISCHE PATENTANMELDUNG

(11) **EP 3 564 008 A1**
(43) Veröffentlichungstag der Anmeldung: **06.11.2019**
(21) Anmeldenummer: 19166824.3
(22) Anmeldetag: 02.04.2019
(51) Int. Cl.: B29C 53/82

(54) **WERKZEUG UND VERFAHREN ZUR HERSTELLUNG EINES HOHLKÖRPERBAUTEILS DURCH FASERWICKELN**

(30) Priorität: 26.04.2018 DE 102018206503
(71) Anmelder: Audi AG, 85045 Ingolstadt (DE)
(72) Erfinder: Eidmann, Florian, 74613 Öhringen (DE); Stoll, Oliver, 69429 Waldbrunn (DE)

(57) **Zusammenfassung**

Die Erfindung betrifft ein Werkzeug für die Herstellung eines Hohlkörperbauteils (100) durch Faserwickeln wenigstens eines Faserstrangs, mit
- einem Kern (200), der eine Wickelfläche (210) zum Ablegen des Faserstrangs aufweist, wobei in der Wickelfläche (210) wenigstens eine Bohrung (220) ausgebildet ist; und mit
- wenigstens einem Haltestift (250), der zur Positionierung und temporären Fixierung eines im Hohlkörperbauteil (100) zu verankernden Lasteinleitungselements (110) am Kern (200) in die Bohrung (220) einsteckbar und später wieder entfernbar ist.

Die Erfindung betrifft ferner ein Verfahren zur Herstellung eines Hohlkörperbauteils (100) aus faserverstärktem Kunststoff (K) mit wenigstens einem im faserverstärkten Kunststoff (K) verankerten Lasteinleitungselement (110) unter Verwendung dieses Werkzeugs.

## Beschreibung

Die Erfindung betrifft ein Werkzeug für die Herstellung eines Hohlkörperbauteils durch Faserwickeln wenigstens eines Faserstrangs.

Die Erfindung betrifft ferner ein Verfahren zur Herstellung eines Hohlkörperbauteils, insbesondere einer Lasthülse zur Befestigung von Drucktanks in Kraftfahrzeugen, aus faserverstärktem Kunststoff durch Faserwickeln, wobei das Hohlkörperbauteil wenigstens ein im faserverstärkten Kunststoff verankertes bzw. darin eingebettetes Lasteinleitungselement aufweist.

Hohlkörperbauteile aus faserverstärktem Kunststoff (FVK) bzw. Faserkunststoffverbund (FKV) können durch sogenanntes Faserwickeln hergestellt werden. Beim Faserwickeln werden ein oder mehrere Endlosfaserstränge, sogenannte Rovings, auf einem Wickelkörper, dem sogenannten Kern, abgelegt, wobei typischerweise mehrere Faserlagen erzeugt werden. Der Kern gibt dem Hohlkörperbauteil seine spätere Gestalt. Die Faserstränge können zuvor, bspw. mittels Tränkbad, mit einem in der Regel duroplastischen Matrixwerkstoff benetzt werden. Es können aber auch bereits mit Matrixwerkstoff vorimprägnierte Faserstränge verwendet werden. Ferner können trockene Faserstränge verwendet werden, die erst nach dem Wickeln mit Matrixwerkstoff benetzt bzw. getränkt werden. Durch Erwärmen wird der Matrixwerkstoff dann ausgehärtet und es entsteht ein Verbundwerkstoff, der auch als Laminat bezeichnet wird. Das Aushärten (z. B. mittels Wärme oder UV-Licht) erfolgt typischerweise auf dem Kern. Danach wird das hergestellte Hohlkörperbauteil vom Kern abgezogen bzw. der Kern herausgelöst.

Aus dem Stand der Technik ist ferner bekannt, Bauteile aus faserverstärktem Kunststoff mit Kraft- bzw. Lasteinleitungselementen (auch als Inserts bezeichnet) zu bestücken, die bspw. Schraub-, Niet- oder Bolzverbindungen (gegebenenfalls auch Löt- und Schweißverbindungen) mit anderen Bauteilen ermöglichen. Solche Lasteinleitungselemente werden idealerweise noch direkt bei der Bauteilherstellung in den Faserkunststoffverbund integriert. Dies ist bspw. in der DE 103 05 015 A1 beschrieben.

Mit der Erfindung soll eine Möglichkeit aufgezeigt werden, wie bei der Herstellung eines Hohlkörperbauteils durch Faserwickeln eine einfache und positionsgenaue Integration von Lasteinleitungselementen gelingen kann, insbesondere auch im Hinblick auf eine Serienfertigung.

Dies gelingt mit dem erfindungsgemäßen Werkzeug des Patentanspruchs 1 und mit den erfindungsgemäßen Verfahren der nebengeordneten Patentansprüche. Weiterbildungen und Ausgestaltungen der Erfindung ergeben sich analog für alle Erfindungsgegenstände aus den abhängigen Patentansprüchen, aus der nachfolgenden Erfindungsbeschreibung und auch aus den Figuren der Zeichnung.

Das erfindungsgemäße Werkzeug für die Herstellung eines Hohlkörperbauteils durch Faserwickeln wenigstens eines Faserstrangs umfasst:
- einen Kern, der eine Wickel- bzw. Mantelfläche zum Ablegen des Faserstrangs aufweist, wobei in der Wickelfläche wenigstens eine Bohrung ausgebildet ist; und
- wenigstens einen Haltestift oder dergleichen, der zur Positionierung und temporären Fixierung (insbesondere bis zur Aushärtung des Matrixwerkstoffs) eines im Hohlkörperbauteil zu verankernden Lasteinleitungselements am Kern vorgesehen ist und der hierzu in die Bohrung einsteckbar und später (nach dem Aushärten des Matrixwerkstoffs) wieder aus der Bohrung entfernbar ist.

Bevorzugt weist der Kern mehrere Bohrungen auf, in die jeweils ein Haltestift zur Positionierung und Fixierung eines Lasteinleitungselements einsteckbar ist.

Das erfindungsgemäße Werkzeug kann in an und für sich bekannter Weise in einer konventionellen Faserwickelmaschine verwendet werden. Mithilfe des Haltestifts kann vor dem Wickeln oder gegebenenfalls auch erst nach dem Wickeln (wie nachfolgend noch näher erläutert) ein Kraft- bzw. Lasteinleitungselement an der vorgesehenen Stelle am Kern fixiert werden. Der Haltestift wird hierzu in die betreffende Bohrung eingesteckt (Steckbefestigung), sodass dessen hinteres axiales Ende herausragt und über die Wickelfläche übersteht. An diesem überstehende Ende wird das Lasteinleitungselement gehaltert bzw. befestigt und ist dadurch positioniert und fixiert. Das Lasteinleitungselement ist insbesondere buchsen- bzw. hülsenartig ausgebildet und kann auf den Haltestift aufgesteckt werden. Nach dem Aushärten des Matrixwerkstoffs kann der Haltestift wieder entfernt werden.

Der Kern kann einteilig oder mehrteilig ausgebildet sein. Ein mehrteiliger Kern kann zerlegt und dadurch besser aus dem hergestellten Hohlkörperbauteil herausgelöst werden. Bevorzugt ist der Kern wiederverwendbar. Der Kern kann aus Metall, insbesondere aus Stahl oder Aluminium, gebildet sein. Bevorzugt ist auch der Haltestift wiederverwendbar. Der Haltestift kann ebenfalls aus Metall, insbesondere aus Stahl oder Aluminium, gebildet sein. Der Haltestift kann aber bspw. auch aus Kunststoff gebildet sein.

Der Kern kann ein Hohlkern (mit einem Hohlraum) sein, wobei die Bohrung durchgängig bis in dessen Hohlraum hinein ausgebildet ist. Dadurch kann der eingesteckte Haltestift in den Hohlraum durchgedrückt bzw. durchgepresst und auf diese Weise entfernt werden.

In der Wickelfläche des Kerns kann um die Bohrung herum eine tellerartige Vertiefung ausgebildet sein, in die das (zu verankernde) Lasteinleitungselement teilweise eingesetzt und dadurch beim Wickeln und/oder Aushärten abgestützt werden kann.

Der Haltestift kann mehrere trennbare Einzelteile aufweisen oder kann einstückig und an einer Sollbruchstelle trennbar ausgebildet sein. Zum einfacheren Entfernen des Haltestifts kann dieser dann in seine Einzelteile oder an der Sollbruchstelle getrennt werden, bspw. durch Aufbringen einer Zugkraft.

Das erste erfindungsgemäße Verfahren zur Herstellung eines Hohlkörperbauteils aus faserverstärktem Kunststoff mit wenigstens einem im faserverstärkten Kunststoff verankerten Lasteinleitungselement umfasst zumindest die folgenden Schritte:
- Bereitstellen eines erfindungsgemäßen Werkzeugs;
- Fixieren des (wenigstens einen) Lasteinleitungselements am Kern, wozu der Haltestift in die Bohrung eingesteckt und das Lasteinleitungselement am überstehenden Ende des Haltestifts gehaltert wird;
- Ausführen eines Wickelvorgangs durch Faserwickeln wenigstens eines Faserstrangs, wobei mehrere Faserlagen erzeugt werden und dabei das am Kern fixierte Lasteinleitungselement umwickelt wird;
- Ausführen eines Aushärtevorgangs (nach gegebenenfalls vorherigem Tränken des Wickels mit Matrixwerkstoff);
- Entfernen des Haltestifts und Herauslösen des Kerns.

Das zweite erfindungsgemäße Verfahren zur Herstellung eines Hohlkörperbauteils aus faserverstärktem Kunststoff mit wenigstens einem im faserverstärkten Kunststoff verankerten Lasteinleitungselement umfasst zumindest die folgenden Schritte:
- Bereitstellen eines erfindungsgemäßen Werkzeugs;
- Ausführen eines Wickelvorgangs durch Faserwickeln wenigstens eines Faserstrangs, wobei mehrere Faserlagen erzeugt werden;
- Positionieren des Lasteinleitungselements, wozu der Haltestift zusammen mit dem an seinem hinteren Ende gehaltenen Lasteinleitungselement (beschädigungsfrei) durch die gewickelten Faserlagen hindurch in die Bohrung eingesteckt und dabei das Lasteinleitungselement in den Faserlagen platziert wird;
- Ausführen eines Aushärtevorgangs (nach gegebenenfalls vorherigem Tränken des Wickels mit Matrixwerkstoff);
- Entfernen des Haltestifts und Herauslösen des Kerns.

Die beiden Verfahren sind auch miteinander kombinierbar, z. B. derart, dass zunächst ein paar Faserlagen gewickelt, dann der Haltestift mit dem Lasteinleitungselement eingesteckt und dann weitergewickelt wird.

Das herzustellende Hohlkörperbauteil ist bevorzugt eine Last- bzw. Befestigungshülse (Skirt) zur Befestigung, insbesondere zur lasttragenden Befestigung, eines Drucktanks (z. B. zur Speicherung von Wasserstoff für einen Brennstoffzellenantrieb oder Gas für einen Gasantrieb) in einem Kraftfahrzeug. Die lasttragende Befestigung eines Drucktanks bzw. -behälters in einem Kraftfahrzeug mittels Lastring (mit integrierten Verbindungsstiften) ist bspw. in der DE 10 2015 222 392 A1 beschrieben.

Die Erfindung wird nachfolgend anhand der Zeichnung näher erläutert. Die in den Figuren der Zeichnung gezeigten Merkmale können, auch unabhängig von den jeweiligen Merkmalskombinationen, allgemeine Merkmale der Erfindung sein und die Erfindung entsprechend weiterbilden. Ferner sind die in den Figuren gezeigten Merkmale auch figurenübergreifend zu weiteren Ausführungsmöglichkeiten kombinierbar.
- Fig. 1: zeigt in einer perspektivischen Darstellung einen Ausschnitt eines erfindungsgemäß hergestellten Hohlkörperbauteils aus faserverstärktem Kunststoff.
- Fig. 2: zeigt in einer schematischen Schnittdarstellung (gemäß dem in Fig. 1 angedeuteten Schnittverlauf A-A) eine erste Ausführungsmöglichkeit der Erfindung.
- Fig. 3: zeigt in einer schematischen Schnittdarstellung (analog zur Fig. 2) eine zweite Ausführungsmöglichkeit der Erfindung.
- Fig. 4: zeigt in einer schematischen Schnittdarstellung (analog zur Fig. 2 und Fig. 3) eine dritte Ausführungsmöglichkeit der Erfindung.

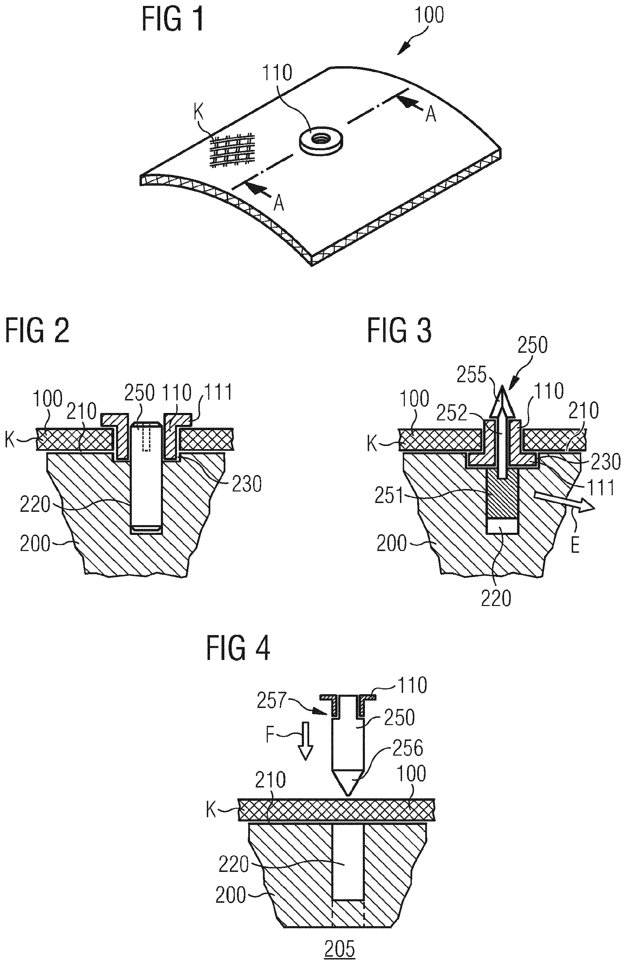

Das in Fig. 1 nur als Ausschnitt gezeigte Hohlkörperbauteil 100 ist aus einem mit Fasern, z. B. Glas- oder Kohlenstofffasern, verstärkten Kunststoff K gebildet und durch Faserwickeln hergestellt, wie eingangs beschrieben. Das Hohlkörperbauteil 100 hat insbesondere eine rotationssymmetrische, z.B. zylindrische, Gestalt. Bei dem Hohlkörperbauteil 100 handelt es sich bspw. um eine Lasthülse (Skirt) zur Befestigung eines Drucktanks in einem Kraftfahrzeug, wie oben beschrieben.

Das Hohlkörperbauteil 100 weist an der gezeigten Stelle ein im faserverstärkten Kunststoff K verankertes, d. h. formschlüssig und insbesondere hinterschnittig eingebettetes, Lasteinleitungselement 110 auf. Das Lasteinleitungselement 110 ist buchsenartig ausgebildet und weist eine Bohrung auf, die ein Innengewinde haben kann, in das eine Schraube einschraubbar ist. Das Lasteinleitungselement 110 kann aus Metall (z. B. Stahl oder Aluminium), Keramik oder Kunststoff gefertigt sein. Das Hohlkörperbauteil 100 weist bevorzugt mehrere solcher Lasteinleitungselemente 110 auf.

In Fig. 2 ist eine erste Ausführungsmöglichkeit veranschaulicht, wie beim Herstellen des Hohlkörperbauteils 100 das Lasteinleitungselement 110 im faserverstärkten Kunststoff K verankert werden kann. Die Herstellung des Hohlkörperbauteils 100 erfolgt mithilfe eines Werkzeugs, zu dem ein Kern 200 mit einer Wickelfläche 210 gehört. Auf der Wickelfläche 210 wird mehrere Faserlagen bildend wenigstens ein Faserstrang abgelegt, wodurch das herzustellende Hohlkörperbauteil 100 vorgeformt wird. An der Stelle des einzubettenden Lasteinleitungselements 110 ist im Kern 200 eine Bohrung 220 mit einer tellerartigen Vertiefung 230 ausgebildet. Die Bohrung 220 erstreckt sich senkrecht zur Wickeloberfläche 210, kann prinzipiell aber auch schräg ausgebildet sein.

Vor dem Wickelvorgang wird in die Bohrung 220 ein bolzenartiger Haltestift 250 eingesteckt, sodass sich dessen vorderes Ende in der Bohrung 220 befindet und dessen hinteres Ende über die Wickelfläche 210 übersteht. Die Bohrung 220 und der Haltestift 250 können mit einer geringen Übermaßpassung ausgebildet sein. Das zu verankernde Lasteinleitungselement 110, welches einen äußeren Kragen 111 aufweist, wird auf das überstehende freie Ende des Haltestifts 250 aufgesteckt, derart, dass dieses teilweise auch in der tellerartigen Vertiefung 230 einsitzt. Zur Halterung des Lasteinleitungselements 110 auf dem Haltestift 250 kann ebenfalls eine geringe Übermaßpassung wirksam sein oder z. B. auch ein lösbarer Klebstoff verwendet werden. Ferner sind einfache Klemmmittel denkbar (siehe z. B. Fig. 3). Das Lasteinleitungselement 110 ist dadurch positioniert und fixiert. Während des folgenden Wickelvorgangs wird das Lasteinleitungselement 110 dann umwickelt, d. h., der Faserstrang wird außen um das Lasteinleitungselement 110 herumgeführt und gelangt dabei auch unter den Kragen 111. Nach dem folgenden Aushärtevorgang kann der Haltestift 250 durch Herausziehen entfernt und der Kern 200 herausgelöst werden.

Bei der in Fig. 3 veranschaulichten zweiten Ausführungsmöglichkeit ist der Haltestift 250 mehrteilig oder zumindest teilbar ausgebildet und weist einen Zapfenabschnitt 251 und einen Halteabschnitt 252 auf. Der Zapfenabschnitt 251 und der Halteabschnitt 252 sind bspw. verklebt, verpresst, magnetisch verbunden oder an einer Sollbruchstelle abreißbar ausgebildet. Das freie Ende des Halteabschnitts 252 ist mit Federbügeln 255 oder dergleichen ausgebildet.

Das zu verankernde Lasteinleitungselement 110 wird über die Federbügel 255 auf den Halteabschnitt 252 aufgesteckt. Danach wird der Haltestift 250 in die Bohrung 220 eingesetzt, sodass sich der Zapfenabschnitt 251 in der Bohrung 220 befindet und der innere Kragen 111 des Lasteinleitungselements 110 in der tellerartigen Vertiefung 230 liegt. Nach dem Wickel- und Aushärtvorgang kann der Halteabschnitt 252 des Haltestifts 250 herausgezogen werden, wobei dieser vom Zapfenabschnitt 251, der bis auf Weiteres in der Bohrung 220 verbleibt, getrennt wird. Anschließend kann der Kern 220 in der Entformungsrichtung E herausgelöst werden.

Bei der in Fig. 4 veranschaulichten dritten Ausführungsmöglichkeit werden der Haltestift 250 und das Lasteinleitungselement 110 erst nach dem Wickelvorgang (aber noch vor dem Aushärten) positioniert. Das Lasteinleitungselement 110 wird auf den Haltestift 250 aufgesteckt, der hierzu an seinem hinteren Ende mit einem durchmesserreduzierten Abschnitt und einer Schulter 257 ausgebildet ist. Der Außendurchmesser des Lasteinleitungselements 110 entspricht dem Hauptdurchmesser des Haltestifts 250, sodass an der Schulter 257 ein kantenfreier Übergang besteht. Der Haltestift 250 weist an seinem vorderen Ende eine abgerundete Spitze 256 auf.

Zum Einstecken wird der dornartige Haltestift 250 mit der Spitze 256 voraus durch die bereits gewickelten Faserlagen gedrückt bzw. getrieben, wie mit dem Pfeil F veranschaulicht. Dabei werden die bereits gewickelten Faserstränge beschädigungsfrei zur Seite gedrückt und es wird Platz geschaffen, für das am hinteren Ende des Haltestifts 250 gehaltene Lasteinleitungselement 110, welches sodann in den Faserlagen platziert wird und einstweilen noch vom Haltestift 250 fixiert ist.

Nach dem Aushärtevorgang kann der Haltestift 250 durch Herausziehen entfernt und der Kern 200 herausgelöst werden. Der Kern 200 kann als Hohlkern ausgebildet sein. Die Bohrung 220 kann dann bis zum Hohlraum 205 im Inneren des Kerns 200 reichen, wie strichliniert dargestellt. Zum Entfernen des Haltestifts 250 kann dieser bis in den Hohlraum 205 durchgedrückt bzw. durchgepresst werden.

## Patentansprüche

1. Werkzeug für die Herstellung eines Hohlkörperbauteils (100) durch Faserwickeln wenigstens eines Faserstrangs, mit
- einem Kern (200), der eine Wickelfläche (210) zum Ablegen des Faserstrangs aufweist, wobei in der Wickelfläche (210) wenigstens eine Bohrung (220) ausgebildet ist; und
- wenigstens einem Haltestift (250), der zur Positionierung und temporären Fixierung eines im Hohlkörperbauteil (100) zu verankernden Lasteinleitungselements (110) am Kern (200) in die Bohrung (220) einsteckbar und später wieder entfernbar ist.

2. Werkzeug nach Anspruch 1,
**dadurch gekennzeichnet, dass**
der Kern (200) und insbesondere auch der Haltestift (250) wiederverwendbar ist/sind.

3. Werkzeug nach Anspruch 1 oder 2,
**dadurch gekennzeichnet, dass**
der Kern (200) ein Hohlkern ist und die Bohrung (220) durchgängig bis in den Hohlraum (205) hinein ausgebildet ist, sodass der eingesteckte Haltestift (250) in den Hohlraum (205) durchgedrückt und dadurch entfernt werden kann.

4. Werkzeug nach einem der vorausgehenden Ansprüche,
**dadurch gekennzeichnet, dass**
in der Wickelfläche (210) um die Bohrung (220) herum eine tellerartige Vertiefung (230) ausgebildet ist, in die das Lasteinleitungselement (110) teilweise einsetzbar ist.

5. Werkzeug nach einem der vorausgehenden Ansprüche,
**dadurch gekennzeichnet, dass**
der Haltestift (250) mehrere trennbare Einzelteile (251, 252) aufweist oder einstückig ausgebildet und an einer Sollbruchstelle trennbar ist.

6. Verfahren zur Herstellung eines Hohlkörperbauteils (100) aus faserverstärktem Kunststoff (K) mit wenigstens einem im faserverstärkten Kunststoff (K) verankerten Lasteinleitungselement (110),
umfassend die Schritte:
- Bereitstellen eines Werkzeugs gemäß einem der vorausgehenden Ansprüche 1 bis 5;
- Fixieren des Lasteinleitungselements (110) am Kern (200), wozu der Haltestift (250) in die Bohrung (220) eingesteckt und das Lasteinleitungselement (110) am überstehenden Ende des Haltestifts (250) gehaltert wird;
- Ausführen eines Wickelvorgangs durch Faserwickeln wenigstens eines Faserstrangs, wobei mehrere Faserlagen erzeugt werden und dabei das am Kern (200) fixierte Lasteinleitungselement (110) umwickelt wird;
- Ausführen eines Aushärtevorgangs;
- Entfernen des Haltestifts (250) und Herauslösen des Kerns (200).

7. Verfahren zur Herstellung eines Hohlkörperbauteils (100) aus faserverstärktem Kunststoff (K) mit wenigstens einem im faserverstärkten Kunststoff (K) verankerten Lasteinleitungselement (110),
umfassend die Schritte:
- Bereitstellen eines Werkzeugs gemäß einem der vorausgehenden Ansprüche 1 bis 5;
- Ausführen eines Wickelvorgangs durch Faserwickeln wenigstens eines Faserstrangs, wobei mehrere Faserlagen erzeugt werden;
- Positionieren des Lasteinleitungselements (110), wozu der Haltestift (250) zusammen mit dem an seinem hinteren Ende gehaltenen Lasteinleitungselement (110) durch die gewickelten Faserlagen hindurch in die Bohrung (220) eingesteckt und dabei das Lasteinleitungselement (110) in den Faserlagen platziert wird;
- Ausführen eines Aushärtevorgangs;
- Entfernen des Haltestifts (250) und Herauslösen des Kerns (200).

8. Verfahren nach Anspruch 6 oder 7,
**dadurch gekennzeichnet, dass**
das herzustellende Hohlkörperbauteil (110) eine Lasthülse zur Befestigung eines Drucktanks in einem Kraftfahrzeug ist.
